(19) Europäisches Patentamt
European Patent Office
Office européen des brevets

(11) **EP 4 092 535 B1**

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **21174921.3**

(22) Anmeldetag: **20.05.2021**

(51) Internationale Patentklassifikation (IPC):
**G06F 11/22** *(2006.01)* **G06F 11/263** *(2006.01)*
**G06F 11/36** *(2006.01)*

(52) Gemeinsame Patentklassifikation (CPC):
**G06F 11/2273; G06F 11/263; G06F 11/3676**

(54) **VERFAHREN ZUM TESTEN VON STEUERGERÄTEN**

CONTROL DEVICE TESTING METHOD

PROCÉDÉ D'ESSAI D'APPAREILS DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.11.2022 Patentblatt 2022/47**

(73) Patentinhaber: **Volkswagen Aktiengesellschaft 38440 Wolfsburg (DE)**

(72) Erfinder: **Glück, Matthias 38176 Wendeburg (DE)**

(56) Entgegenhaltungen:
**CN-A- 112 256 572     DE-A1-102017 212 612
US-A1- 2007 076 616     US-A1- 2007 198 970**

**Beschreibung**

Die Erfindung betrifft ein Verfahren zum Testen von Steuergeräten sowie ein Recheneinheitsprogramm und ein Recheneinheitsprogrammprodukt. Zudem wird eine Testschaltung und eine entsprechende Testvorrichtung und ein Fahrzeug vorgestellt. Auch wird eine Verwendung des vorgestellten Verfahrens in einem mechanischen Testverfahren vorgestellt.

Steuergeräte sind in einer Vielzahl von unterschiedlichsten technischen Lösungen ein wichtiger Bestandteil. Dabei reicht ihre Anwendung von einfachen bis hin zu essentiellen Aufgabenbereichen. Insbesondere Steuergeräte in Fahrzeugen, Schiffen oder in Flugzeugen sind für essentielle Aufgabenbereiche vorgesehen, sodass ohne ihre einwandfreie Funktionsweise ein sicherer Betrieb nicht gewährleistbar ist.

Steuergeräte in Fahrzeugen, Schiffen oder allgemein in der Flugindustrie werden nach dem klassischen V-Modell entwickelt. Dabei werden auf der linken Seite V Anforderungen formuliert, welche auf der rechten Seite V dann getestet werden beziehungsweise zum Test kommen. Das V-Modell geht allgemein dabei von einzelnen disjunkten, eindeutigen, atomaren und testbaren Anforderungen aus. Dies steht im Einklang mit den Softwareanforderungen gemäß beispielsweise der ISO 29148. Im Test werden die Anforderungen einzeln nacheinander durch verschiedene Testentwurfsverfahren getestet. Diese Verfahren sind etwa in der ISO 26262 für sicherheitskritische Systeme beschrieben. Auch sind Verfahren in der ISO 29119 detailliert beschrieben.

Durch die sequentielle Ausführung der entsprechenden Tests und damit das eigentliche Abtesten der einzelnen Anforderungen kann keine Aussage über eine eventuell existierende kombinatorische Abdeckung getroffen werden.

Bisherige Verfahren und Produkte geben Resultate in einfacher Form aus oder zeigen maximal redundante oder ausgelassene Komponenten auf, ohne dabei auf eventuell vorhandene Kombinationen einzugehen. Dadurch sind keine Aussagen über kombinatorische Abdeckungen möglich, sodass die von dem getesteten Steuergerät im Zusammenhang stehenden Funktionen nur jeweils für sich, aber nicht in einem übergeordneten Kontext getestet werden. Auf diese Weise sind keine Aussagen über fehlgeschlagene Funktionen in gegenseitiger Abhängigkeit möglich, was mitunter zu einem Fehlinterpretieren hinsichtlich eines Testqualitätsmaß führt. Sowohl für eine erstmalige Freigabe eines solch getesteten Steuergeräts als auch während eines entsprechenden Betriebs von solch einem Steuergerät können hieraus gravierende Nachteile hervorgehen. Nachfolgend wird ein Beispiel aus dem Stand der Technik näher vorgestellt.

So ist aus der Druckschrift US 6,473,794 B1 ein System zur Erstellung eines Plans zum Testen von Komponenten eines webbasierten Frameworks durch Anzeigen einer bildlichen Darstellung und durch Übermitteln von indiziencodierten Komponenten eines vorhandenen Netzwerk-Frameworks als bekannt zu entnehmen. Insbesondere werden ein System, eine Methode und ein Herstellungsgegenstand bereitgestellt, um das Testen von Komponenten eines vorhandenen Netzwerkframeworks zu planen. Zunächst wird dabei eine bildliche Darstellung eines vorhandenen Netzwerkframeworks zusammen mit mehreren Komponenten des vorhandenen Netzwerkframeworks angezeigt. Danach werden die Komponenten des vorhandenen Netzwerk-Frameworks indiziencodiert, um einen Plan zu vermitteln, mit dem die Komponenten des vorhandenen Netzwerk-Frameworks getestet werden sollen. Die Komponenten können indiziencodiert sein, um eine Reihenfolge der Tests zu übermitteln oder um anzuzeigen, welche Komponenten des vorhandenen Netzwerkframeworks getestet werden sollen.

Der Erfindung liegt nun die Aufgabe zugrunde, ein alternatives Verfahren zum Testen von Steuergeräten bereitzustellen, welches die zuvor angesprochenen Nachteile wenigstens zum Teil überkommt.

In bevorzugter Ausgestaltung der Erfindung ist vorgesehen, dass ein Verfahren zum Testen von Steuergeräten bereitgestellt wird. Solch ein Verfahren umfasst dabei die folgenden Schritte: Bereitstellen und Betreiben eines Steuergeräts, welches wenigstens eine Funktion in Abhängigkeit wenigstens einer Bedingung und/oder wenigstens eine invariante Funktion umfasst. Es wird eine Testroutine bereitgestellt und betrieben, welche das betriebene Steuergerät hinsichtlich seiner Funktion testet. Es werden die zu testenden Funktionen in wenigstens zwei Gruppen aufgeteilt. Anschließend werden die jeweiligen Funktionen der wenigstens zwei Gruppen getestet. Es folgt die Ermittlung, inwieweit eine getestete Funktion eine Verbindung zu wenigstens einer getesteten Funktion aus wenigstens einer anderen Gruppe aufweist. Die getesteten Funktionen werden jeweils mit verbundenen und getesteten Funktionen aus allen Gruppen kombiniert. Es werden jeweilige Zwischenergebnisse von jeweiligen Kombinationen erstellt. Die Zwischenergebnisse werden zu einem Kombinationstestergebnis zusammengefasst. Das Kombinationsergebnis wird bereitgestellt.

Auf diese Weise ist es möglich, ein Verfahren bereitzustellen, welches die zuvor angesprochenen Nachteile wenigstens zum Teil überkommt. Das vorgestellte Verfahren ist somit grundlegend dafür ausgelegt, eine Abdeckung etwa von Sicherheitsfunktionen unter Berücksichtigung von funktionalen Merkmalen zu gewährleisten.

Insbesondere dann, wenn das zu testende Steuergerät in einem Produkt vorgesehen wird, welches in Teilbereichen sicherheitsrelevante Merkmale aufweist, ist es wichtig zu erkennen, ob alle Sicherheitsfunktionen auch im Hinblick auf jeweilige Interdependenzen greifen oder nicht. Dadurch, dass sicherheitsrelevante Funktionen und damit verbundene weitere Funktionen gleichermaßen für sich getestet werden und anschließend über eine Verknüpfung dieser dann eine übergeordnete Aussage in Form eines Kombinationsergebnisses bereitgestellt wird, ist es möglich, ein erweitertes Sicherheitsqualitätsmaß zu erreichen. Ist etwa eine für sich stehende Funktion, welche für sich genommen als nicht sicherheitsrelevant einzustufen ist, wiederum für eine sicherheitsrelevante Funktion von einer gewissen Bedeutung, so liefert das Kombinationsergebnis hier erste Hinweise etwa über ein Ausmaß von derlei problematischen Kreuzverbindungen. Das Kombinationsergebnis kann somit in nachgelagerten Schritten etwa für die Verbesserungen des Steuergeräts herangezogen werden und liefert Experten erste konkrete Hinweise über mögliche Schwachstellen.

In weiterer bevorzugter Ausgestaltung der Erfindung ist vorgesehen, dass ein Recheneinheitsprogramm bereitgestellt wird, welches Programmcodemittel zum Durchführen aller Schritte gemäß einem der Ansprüche 1 bis 9 umfasst, wenn das Programm auf einer Recheneinheit ausgeführt wird. Die zuvor genannten Vorteile gelten, soweit übertragbar, auch für das bereitgestellte Recheneinheitsprogramm. Die Recheneinheit, auf welcher das Recheneinheitsprogramm vorgesehen wird, kann beispielsweise ein jeglicher Computer sein, insbesondere ein Computer, welcher für die Verwendung in einem Fahrzeug ausgelegt ist.

In weiterer bevorzugter Ausgestaltung der Erfindung ist vorgesehen, dass ein Recheneinheitsprogrammprodukt bereitgestellt wird, welches Programmcodemittel umfasst, welche auf einem computerlesbaren Medium gespeichert sind, um das Verfahren gemäß einem der Ansprüche 1 bis 9 durchzuführen, wenn das Programm in einer Recheneinheit läuft. Die zuvor genannten Vorteile gelten, soweit übertragbar, auch für das vorgestellte Recheneinheitsprogrammprodukt. Die Recheneinheit, für welche das Recheneinheitsprogrammprodukt vorgesehen ist, kann beispielsweise ein jeglicher Computer sein, insbesondere ein Computer, welcher für die Verwendung in einem Fahrzeug ausgelegt ist. Auch kann beispielsweise ein Computer gemeint sein, welcher sich für eine Verwendung in der Flugzeugindustrie, in der Biotechnologie oder für die Schifffahrt eignet.

In weiterer bevorzugter Ausgestaltung der Erfindung ist vorgesehen, dass eine Testschaltung bereitgestellt wird, welche dazu eingerichtet ist, ein Verfahren gemäß einem der Ansprüche 1 bis 9 auszuführen. Die zuvor genannten Vorteile gelten, soweit übertragbar, auch für die vorgestellte Testschaltung.

In weiterer bevorzugter Ausgestaltung der Erfindung ist vorgesehen, dass eine Testvorrichtung bereitgestellt wird, welche eine Testschaltung nach Anspruch 14 umfasst. Die zuvor genannten Vorteile gelten, soweit übertragbar, auch für die vorgestellte Testvorrichtung.

In weiterer bevorzugter Ausgestaltung der Erfindung ist vorgesehen, dass ein Fahrzeug mit zumindest einer Testvorrichtung gemäß Anspruch 14 bereitgestellt wird. Die zuvor genannten Vorteile gelten, soweit übertragbar, auch für das vorgestellte Fahrzeug.

In weiterer bevorzugter Ausgestaltung der Erfindung ist vorgesehen, dass eine Verwendung des Verfahrens gemäß einem der Ansprüche 1 bis 9 für eine Anwendung in einem mechanischen Testverfahren vorgesehen wird. Die zuvor genannten Vorteile gelten, soweit übertragbar, auch für vorgesehene Verwendung.

Weitere bevorzugte Ausgestaltungen der Erfindung ergeben sich aus den übrigen, in den Unteransprüchen genannten Merkmalen.

So ist in einer weiteren bevorzugten Ausgestaltung der Erfindung vorgesehen, dass eine erste Gruppe Funktionen umfasst, welche benutzerdefiniert als sicherheitsrelevante Funktionen klassifiziert werden und alle weiteren Gruppen die übrigen Funktionen umfassen. Somit lassen sich jeweilige Teilaussagen hinsichtlich jeweiliger Funktionen zunächst ermitteln, um anschließend eine gezielte Kombinatorik durchzuführen. Es lassen sich benutzerdefiniert jeweilige Einstellungen bewirken, sodass das vorgestellte Verfahren in einfachen Schritten mit Vorteil an jeweilige Anwendungsszenarien anpassbar ist, sodass ein besonders flexibles Verfahren resultiert.

Auch ist in einer weiteren bevorzugten Ausgestaltung der Erfindung vorgesehen, dass das Kombinieren als jeweilige Kreuzproduktbildung vollzogen wird. Eine zielgenaue Kombinatorik erhöht somit die Aussagekraft des Endergebnisses, sodass eine gezielte Interpretation möglich ist.

Zudem ist in einer weiteren bevorzugten Ausgestaltung der Erfindung vorgesehen, dass das Kombinationstestergebnis mit einem theoretisch zu erreichenden Kombinationstestergebnis gegenübergestellt wird, um anschließend eine Aussage zu diesem Verhältnis bereitzustellen. Eine Verhältnisaussage ist somit etwa für ein Entwicklerteam besser greifbar und kann zudem als Qualitätsmaßstab dienen, sodass eine schnellere Einschätzung möglich ist. Das vorgestellte Verfahren ist somit mit Vorteil für eine anstehende Qualitätssicherung und insbesondere hinsichtlich einer funktionalen Sicherheit einsetzbar.

Ferner ist in einer weiteren bevorzugten Ausgestaltung der Erfindung vorgesehen, dass die vorherigen Schritte im Zusammenhang mit wenigstens einer Software des zu testendenden Steuergeräts vollzogen werden. Das Verfahren ist entsprechend flexibel einsetzbar und lässt sich für dieses Szenario auslegen.

Auch ist in einer weiteren bevorzugten Ausgestaltung der Erfindung vorgesehen, dass die vorherigen Schritte im Zusammenhang mit wenigstens einer Hardwarekomponente des zu testendenden Steuergeräts vollzogen werden. Das Verfahren ist entsprechend flexibel einsetzbar und lässt sich für dieses Szenario auslegen.

Zudem ist in einer weiteren bevorzugten Ausgestaltung der Erfindung vorgesehen, dass die vorherigen Schritte im Zusammenhang mit wenigstens einer Software und mit wenigstens einer Hardwarekomponen-

te des zu testenden Steuergeräts vollzogen werden. Das Verfahren ist entsprechend flexibel einsetzbar und lässt sich für dieses Szenario auslegen.

Ferner ist in einer weiteren bevorzugten Ausgestaltung der Erfindung vorgesehen, dass das Verfahren als Ergänzung zu einem Robustheitstestverfahren durchgeführt wird. Das Verfahren ist entsprechend flexibel einsetzbar und lässt sich für dieses Szenario auslegen. Schlussendlich ist in einer weiteren bevorzugten Ausgestaltung der Erfindung vorgesehen, dass das Verfahren als Ergänzung zu einem Verfahren zur parallelen Echtzeitanalyse bei Funktionsprüfungen von Hardware und Software von Steuergeräten durchgeführt wird. Das Verfahren ist entsprechend flexibel einsetzbar und lässt sich für dieses Szenario auslegen.

Das vorgestellte Verfahren ist beispielsweise für das Testen von Steuergeräten zu verwenden, welche in der Fahrzeugindustrie in den jeweiligen Produkten, etwa einem Kraftfahrzeug, vorgesehen sind. Auch in der Luftfahrtindustrie oder in der Schiffsproduktion sind entsprechende Einsatzszenarien denkbar. Ferner ist vorstellbar, dass die vorgestellten Gegenstände jeweils auch innerhalb von Produkten aus der Medizintechnik eingesetzt werden. Allgemein ist vorstellbar, dass die Gegenstände beziehungsweise das Verfahren und seine jeweiligen Ausführungsvarianten bei allen Software/Hardware(Elektronik)-testbaren Produkten Verwendung finden, die entsprechend mit einer Debug-Schnittstelle ausgestattet sind. Auch ist vorstellbar, dass eine Verwendung bei reinen softwarebasierten Tests vorgesehen wird, wobei entsprechend diese keine Debug-Schnittstelle benötigen, um die notwendigen Informationen aus dem Produkt beziehungsweise der Software zu erhalten.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

Figur 1 eine schematische Darstellung von einem Ablaufdiagramm von einem Verfahren zum Testen von Steuergeräten;

Figur 2 eine schematische Darstellung von einem Recheneinheitsprogramm;

Figur 3 eine schematische Darstellung von einem Recheneinheitsprogrammprodukt;

Figur 4 eine schematische Darstellung von einer Testschaltung;

Figur 5 eine schematische Darstellung von einer Testvorrichtung;

Figur 6 eine schematische Darstellung von einem Fahrzeug.

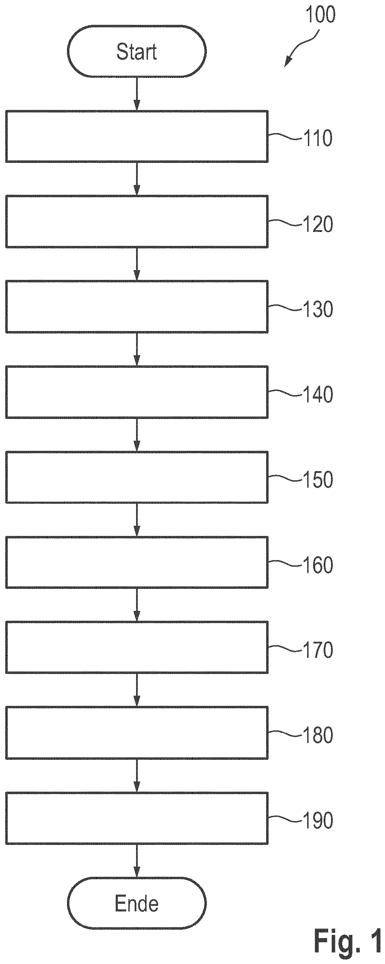

Figur 1 zeigt eine schematische Darstellung von einem Ablaufdiagramm 100 von einem Verfahren zum Testen von Steuergeräten. In einem ersten Verfahrensschritt 110 wird ein Steuergerät bereitgestellt und betrieben, welches wenigstens eine Funktion in Abhängigkeit wenigstens einer Bedingung und wenigstens eine invariante Funktion umfasst. In einem zweiten Verfahrensschritt 120 wird eine Testroutine bereitgestellt und betrieben, welche das betriebene Steuergerät hinsichtlich seiner Funktion testet. In einem dritten Verfahrensschritt 130 werden die zu testenden Funktionen in wenigstens zwei Gruppen aufgeteilt. In einem vierten Verfahrensschritt 140 werden die jeweiligen Funktionen der wenigstens zwei Gruppen getestet. Beispielsweise ist es vorstellbar, dass diese jeweiligen Testresultate in Form von Logfiles erstellt werden. In einem fünften Verfahrensschritt 150 wird ermittelt, inwieweit eine getestete Funktion eine Verbindung zu wenigstens einer getesteten Funktion aus wenigstens einer anderen Gruppe aufweist. Die im vorherigen Schritt erstellten Logfiles sind beispielsweise hierfür auslesbar vorliegend, sodass diese Informationen entsprechend herausgezogen werden können. In einem sechsten Verfahrensschritt 160 werden die getesteten Funktionen mit jeweils verbundenen und getesteten Funktionen aus allen anderen Gruppen kombiniert. In einem siebten Verfahrensschritt 170 werden jeweilige Zwischenergebnisse von jeweiligen Kombinationen erstellt. In einem achten Verfahrensschritt 180 werden die Zwischenergebnisse zu einem Kombinationstestergebnis zusammengefasst. In einem neunten Verfahrensschritt 190 wird das Kombinationstestergebnis bereitgestellt.

Das Testen der jeweiligen Funktionen kann etwa über geeignete Testcoveragemetriken in Anlehnung an ISO29119-4 vollzogen werden. Auf diese Weise ist es möglich, ein gewisses Maß an Qualität zu ermitteln. Dabei ist weiterhin vorstellbar, dass die Zuordnung der Funktion auf jeweilige Gruppen insbesondere so vollzogen wird, sodass eine Unterscheidung der Funktionen basierend auf ihrer Eigenschaft in wenigstens einen Testobserver und in Invarianten durchführbar ist. Dabei ist ein Testobserver ein Überwacher einer Funktion. Er basiert auf einer Anforderung auf der linken Seite des V-Modells. Er ist somit der eigentliche Prüfalgorithmus zum Test der konkreten Anforderung, auf welcher er basiert. Im Gegenteil zu einer Invariante ist ein Testobserver an wenigstens eine Bedingung geknüpft. Wenn zum Beispiel die Eigenspannung größer oder gleich sechs Volt ist und das Produkt sich im eingeschalteten Zustand befindet, wobei dieser Zustand zusätzlich als "aktiver Modus" deklariert ist, dann soll die Unterstützungsleistung immer größer oder gleich einem vorgegebenem Wert sein. Im Gegensatz zu einem Testobserver ist eine Invariante eine Bedingung, welche zu jedem beliebigen Zeitpunkt gültig ist. Zum Beispiel kann vorgesehen sein, dass ein Produkt innerhalb einer vorgegebenen Zeitspanne, beispielsweise fünf Millisekunden, auf dem Bus eine Antwort geben muss. Somit ist eine Invariante ein spezieller Observer, wobei diese Invariante jedoch ohne Bedingungen vorgesehen ist.

Basierend auf der allgemeinen Aussage, eine gewisse Funktion, welche in einem Steuergerät hinterlegt ist und sich zu einer bestimmten Gruppe zuordnen lässt, abzutesten, ist es im Detail vorstellbar, dass dieses Abtesten wie folgt vollzogen wird: Wenn die Testobserver respektive die Invarianten als Coveragepunkte definiert werden, so ergeben sich jeweilige Coveragemengen, die hauptsächlich bei anforderungsbasierten Testroutinen linear durchlaufen werden. Die jeweiligen Coveragepunkte, einsortiert in eine Menge, basieren dabei auf jeweils getesteten Anforderungen und somit auch auf den durch die Anforderungen hinterlegten jeweiligen Merkmalen und deren jeweiligen Definitionen, welche jeweils mit den zu testenden Funktionen assoziiert sind. Beispielsweise resultiert eine Menge an Coveragepunkten wie folgt:

$$G = \{ C_i \} \text{ mit } i = 0 \dots n - 1$$

Die einzelnen $C_i$ werden bei dem anforderungsbasierten Testen alle bei vollständiger Umsetzung der Anforderungen im Test abgelaufen. So ist es möglich, eine Basis für eine inhaltliche Anforderungsabdeckung zu generieren, welche für das Testen einer jeweiligen für sich stehenden Funktion repräsentativ ist. Vor dem Durchführen des eigentlichen Tests können beispielsweise jeweilige $C_i$ auf null gesetzt werden. Jedes $C_i$ wird inkrementiert sobald es im Test angelaufen wird. Dabei kann über eine Struktur im $C_i$ vermerkt werden, ob es sich um einen erfolgreichen oder fehlgeschlagenen Test für das jeweilige $C_i$ handelt. Am Ende von den anforderungsbasierten Testläufen darf kein $C_i$ ungefüllt sein. Es ist somit möglich eine Statistik über die Auswertung von $G$ anzulegen oder sich ausgeben zu lassen, wobei vermerkt wird, welches $C_i$ wie oft erfolgreich beziehungsweise fehlgeschlagen ist.

Ausgehend von diesen jeweils durchgeführten Testläufen mit jeweiligen resultierenden Informationen ist anschließend eine Erweiterung um die Mächtigkeit der Kombinatorik von $C_i$ vorgesehen. Diese Kombinatorik ist im Speziellen deswegen wichtig, um etwa bei sicherheitsrelevanten Produkten eine entsprechende Merkmals-Kreuzproduktcoverage aufzubauen. Insbesondere in sicherheitsrelevanten Produkten ist es wichtig zu erkennen, ob alle Sicherheitsfunktionen unter verschiedenen funktionalen Aspekten greifen. Dies ist entsprechend mit jeweiligen Coveragepunktmengen aus den verschiedenen Gruppen möglich.

$$S = \{ CS_i \} \text{ mit } i = 0 \dots k - 1,$$

wobei k die Anzahl der Sicherheitsfunktion ist.

Die restlichen Funktionen sind entsprechend in eine andere Menge respektive in eine andere Gruppe zu packen:

$$F = \{ C_i \} \text{ mit } i = 0 \dots n - k - 1.$$

Durch die Kreuzproduktbildung der Menge S und F ist anschließend eine Abdeckung der Sicherheitsfunktionen unter Berücksichtigung der funktionalen Merkmale möglich.

$$K = S \times F.$$

Auch hier ist es möglich, über die Zwischenergebnisse hinaus ein aggregiertes Kombinationsergebnis zu bestimmen, welches entsprechend für eine weitere Analyse dann bereitstellbar ist. Mit anderen Worten werden entsprechend nach einem jeweiligen Vorgang von jedem $K_i$ die Anzahl der erfolgreichen und nicht erfolgreichen Tests wiedergegeben. Ein jeweils vollständiges Ablaufen aller $K_i$ kann beispielsweise dann in Kombination mit einem entsprechendem Robustheitstestverfahren erfolgen.

Es ist zudem vorstellbar, dass die Coveragepunkte sich auch zu komplexeren Szenarien aufbauen lassen. Zum Beispiel will man den Ablauf im Test von C1 → C4 → C5 sehen. Über eine Coverage-Merkmalspfadanalyse lassen sich Aussagen über die Stabilität des Produkts unter bestimmten funktionalen Bedingungen beschreiben.

Die Messung der Coveragepunkte kann in einem Softwarebasierten Test durch das Abgreifen der Software-Variablen, der Strukturen und Informationen einfach geschehen. Bei einem vorliegenden Elektronik-Hardwarebasiertem Test kann die Information aus den Datenströmen von entsprechenden Debug-Schnittstellen von MCU ermittelt werden. Dies kann beispielsweise in Kombination mit einem Echtzeitanalyseverfahren, welches für die Funktionsprüfungen von Hardware und Software von Steuergeräten ausgelegt ist, vollzogen werden.

Dadurch, dass eine Datenerhebung unabhängig vom Prüfort und einer Prüfumgebung ist, ist sie universell. Durch klare Messkriterien für eine Steuergerätesoftwarequalität können Produkte solider auf dem Markt gebracht werden. Maßnahmen können kontrolliert werden und eine jeweilige Verbesserung der Steuergerätesoftware ist mittels des vorgestellten Verfahrens deswegen vorteilhaft messbar.

Insbesondere für den Fahrzeugbau ist das vorgestellte Verfahren von hohem Nutzen. Durch den stetig wachsenden Anteil von Softwarefunktionen im Fahrzeug steigt auch deren Wahrnehmung bei den Kunden. Die Kunden verstehen zunehmend, dass entsprechende Software von Steuergeräten die Qualität ihres Fahrzeugs bestimmen. Mit dem vorgestellten Verfahren ist es möglich, mit einem überschaubaren Aufwand auch komplexere Zusammenhänge abzuprüfen und insbesondere vernetzte Strukturen unter den genannten Bedingungen bereits während der Entwicklungsphase zu testen und je nach Ergebnis dann zu verbessern. Das vorgestellte Verfahren eignet sich, um eine Qualitätsmetrik aufzubauen beziehungsweise die jeweiligen erhaltenen Ergebnisse hierfür zu verwenden. Insbesondere ist auch eine Kombination aus hardware- und softwarebasierten Tests möglich, um folglich eine Gesamtqualitätsmetrik aufzubauen.

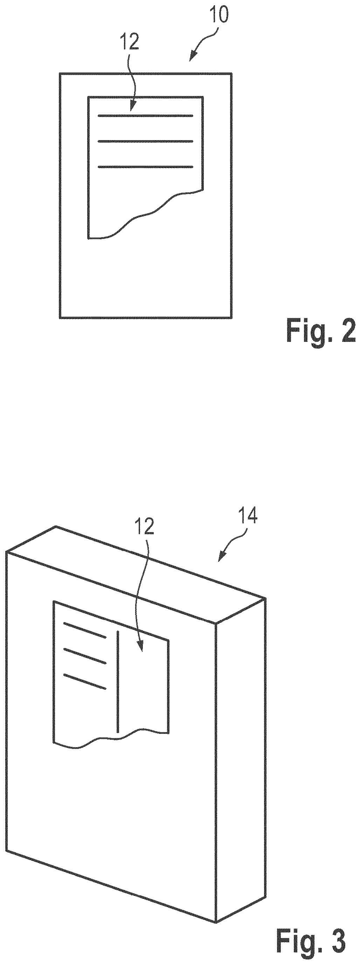

Figur 2 zeigt eine schematische Darstellung von einem Recheneinheitsprogramm 10. Solch ein Recheneinheitsprogramm 10 umfasst dabei Programmcodemittel 12 zum Durchführen aller Schritte gemäß einem der Ansprüche 1 bis 9, wenn das Programm auf einer nicht näher dargestellten Recheneinheit ausgeführt wird.

Figur 3 zeigt eine schematische Darstellung von einem Recheneinheitsprogrammprodukt 14. Solch ein Recheneinheitsprogrammprodukt 14 umfasst dabei Programmcodemittel 12, welche auf einem computerlesbaren Medium gespeichert sind, um das Verfahren gemäß einem der Ansprüche 1 bis 9 durchzuführen, wenn das Programm in einer Recheneinheit läuft.

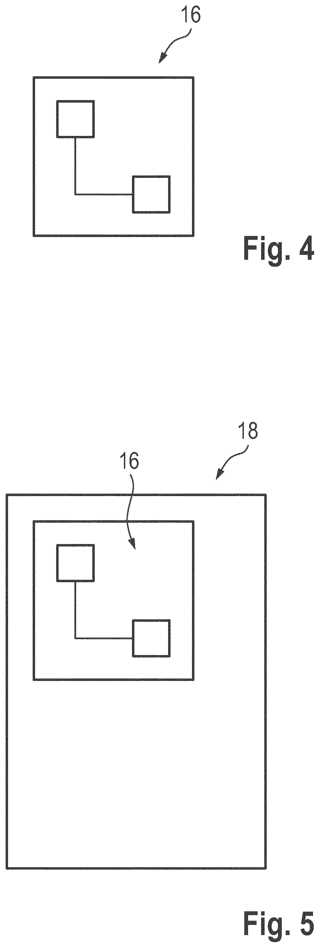

Figur 4 zeigt eine schematische Darstellung von einer Testschaltung 16. Solch eine Testschaltung 16 ist dazu eingerichtet, ein Verfahren gemäß einem der Ansprüche 1 bis 9 auszuführen.

Figur 5 zeigt eine schematische Darstellung von einer Testvorrichtung 18. Diese Testvorrichtung 18 umfasst dabei eine Testschaltung 16 nach Anspruch 14.

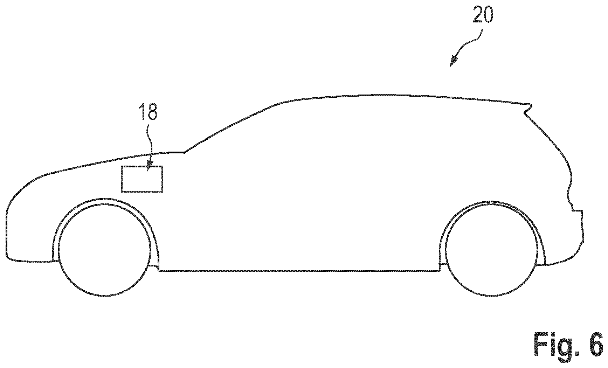

Figur 6 zeigt eine schematische Darstellung von einem Fahrzeug 20. Dieses Fahrzeug 20 umfasst eine Testvorrichtung 18 gemäß Anspruch 14. In einer nicht näher dargestellten Ausführungsvariante ist vorstellbar, dass dieses Fahrzeug 20 mehr als eine Testvorrichtung 18, beispielsweise zwei bis vier, umfasst.

**Bezugszeichenliste**

| | |
|---|---|
| 10 | Recheneinheitsprogramm |
| 12 | Programmcodemittel |
| 14 | Recheneinheitsprogrammprodukt |
| 16 | Testschaltung |
| 18 | Testvorrichtung |
| 20 | Fahrzeug |
| | |
| 100 | Ablaufdiagramm |
| 110 | erster Verfahrensschritt |
| 120 | zweiter Verfahrensschritt |
| 130 | dritter Verfahrensschritt |
| 140 | vierter Verfahrensschritt |
| 150 | fünfter Verfahrensschritt |
| 160 | sechster Verfahrensschritt |
| 170 | siebter Verfahrensschritt |
| 180 | achter Verfahrensschritt |
| 190 | neunter Verfahrensschritt |

**Patentansprüche**

1. Verfahren zum Testen von Steuergeräten umfassend die folgenden Schritte:

　• Bereitstellen und Betreiben eines Steuergeräts, welches wenigstens eine Funktion in Abhängigkeit wenigstens einer Bedingung und/oder wenigstens eine invariante Funktion umfasst;
　• Bereitstellen und Betreiben einer Testroutine, welche das betriebene Steuergerät hinsichtlich seiner Funktion testet;
　• Aufteilen der zu testenden Funktionen in wenigstens zwei Gruppen;
　• Testen jeweiliger Funktionen der wenigstens zwei Gruppen;

**dadurch gekennzeichnet, dass** das Verfahren die folgenden weiteren Schritte umfasst:

　• Ermitteln, inwieweit eine getestete Funktion eine Verbindung zu wenigstens einer getesteten Funktion aus wenigstens einer anderen Gruppe aufweist;
　• Kombinieren von getesteten Funktionen mit jeweils verbundenen und getesteten Funktionen aus allen anderen Gruppen;
　• Erstellen von jeweiligen Zwischenergebnissen von jeweiligen Kombinationen;
　• Zusammenfassen der Zwischenergebnisse zu einem Kombinationstestergebnis;
　• Bereitstellen des Kombinationstestergebnisses.

2. Verfahren nach Anspruch 1, wobei eine erste Gruppe Funktionen umfasst, welche benutzerdefiniert als sicherheitsrelevante Funktionen klassifiziert werden und alle weiteren Gruppen die übrigen Funktionen umfassen.

3. Verfahren nach einem der vorherigen Ansprüche, wobei das Kombinieren als jeweilige Kreuzproduktbildung vollzogen wird.

4. Verfahren nach einem der vorherigen Ansprüche, wobei das Kombinationstestergebnis mit einem theoretisch zu erreichenden Kombinationstestergebnis gegenübergestellt wird, um anschließend eine Aussage zu diesem Verhältnis bereitzustellen.

5. Verfahren nach einem der vorherigen Ansprüche, wobei die vorherigen Schritte im Zusammenhang mit wenigstens einer Software des zu testendenden Steuergeräts vollzogen werden.

6. Verfahren nach einem der vorherigen Ansprüche 1 bis 4, wobei die vorherigen Schritte im Zusammenhang mit wenigstens einer Hardwarekomponente des zu testenden Steuergeräts vollzogen werden.

7. Verfahren nach einem der vorherigen Ansprüche 1 bis 4, wobei die vorherigen Schritte im Zusammenhang mit wenigstens einer Software und mit wenigstens einer Hardwarekomponente des zu testenden Steuergeräts vollzogen werden.

8. Verfahren nach einem der vorherigen Ansprüche, wobei das Verfahren als Ergänzung zu einem Robustheitstestverfahren durchgeführt wird.

9. Verfahren nach einem der vorherigen Ansprüche, wobei das Verfahren als Ergänzung zu einem Verfahren zur parallelen Echtzeitanalyse bei Funktionsprüfungen von Hardware und Software von Steuergeräten durchgeführt wird.

10. Verwendung des Verfahrens gemäß einem der Ansprüche 1 bis 9 für eine Anwendung in einem mechanischen Testverfahren.

11. Recheneinheitsprogramm (10) umfassend Programmcodemittel (12) zum Durchführen aller Schritte gemäß einem der Ansprüche 1 bis 9, wenn das Programm auf einer Recheneinheit ausgeführt wird.

12. Recheneinheitsprogrammprodukt (16) umfassend Programmcodemittel (12), welche auf einem computerlesbaren Medium gespeichert sind, um das Verfahren gemäß einem der Ansprüche 1 bis 9 durchzuführen, wenn das Programm in einer Recheneinheit läuft.

13. Testschaltung (16), welche dazu eingerichtet ist, ein Verfahren gemäß einem der Ansprüche 1 bis 9 auszuführen.

14. Testvorrichtung (18), welche eine Testschaltung (16) nach Anspruch 14 umfasst.

15. Fahrzeug (20) mit zumindest einer Testvorrichtung (18) gemäß Anspruch 14.

**Claims**

1. Method for testing control apparatuses, comprising the following steps:

    • providing and operating a control apparatus which comprises at least one function depending on at least one condition and/or at least one invariant function;
    • providing and operating a test routine which tests the operated control apparatus with respect to its function;

    • dividing the functions to be tested into at least two groups;
    • testing each of the functions of the at least two groups;

    **characterized in that** the method comprises the following further steps:

    • determining to what extent a tested function has a connection to at least one tested function from at least one other group;
    • combining tested functions with each of the connected and tested functions from all of the other groups;
    • creating respective intermediate results of each of the combinations;
    • grouping the intermediate results to form a combination test result; and
    • providing the combination test result.

2. Method according to claim 1, wherein a first group comprises functions which are classified by user definition as safety-relevant functions, and all further groups comprise the remaining functions.

3. Method according to either of the preceding claims, wherein combining is carried out as a corresponding cross-product formation.

4. Method according to any of the preceding claims, wherein the combination test result is compared with a theoretically achievable combination test result in order to subsequently provide a statement regarding this ratio.

5. Method according to any of the preceding claims, wherein the previous steps are carried out in connection with at least one software of the control apparatus to be tested.

6. Method according to any of the preceding claims 1 to 4, wherein the previous steps are carried out in connection with at least one hardware component of the control apparatus to be tested.

7. Method according to any of the preceding claims 1 to 4, wherein the previous steps are carried out in connection with at least one software and with at least one hardware component of the control apparatus to be tested.

8. Method according to any of the preceding claims, wherein the method is performed as a supplement to a robustness test method.

9. Method according to any of the preceding claims, wherein the method is performed as a supplement to a method for parallel real-time analysis during functional tests of hardware and software of control apparatuses.

10. Use of the method according to any of claims 1 to 9 for use in a mechanical test method.

11. Computing unit program (10) comprising program code means (12) for performing all the steps according to any of claims 1 to 9 when the program is executed on a computing unit.

12. Computing unit program product (16) comprising program code means (12) which are stored on a computer-readable medium for performing the method according to any of claims 1 to 9 when the program runs in a computing unit.

13. Test circuit (16) which is designed to execute a method according to any of claims 1 to 9.

14. Test device (18) which comprises a test circuit (16) according to claim 14.

15. Vehicle (20) having a test device (18) according to claim 14.

**Revendications**

1. Procédé permettant de tester des appareils de commande, comprenant les étapes suivantes :

   • fourniture et exploitation d'un appareil de commande, lequel comprend au moins une fonction en dépendance d'au moins une condition et/ou au moins une fonction invariante ;
   • fourniture et exploitation d'une routine de test, laquelle teste l'appareil de commande exploité quant à sa fonction ;
   • séparation des fonctions à tester en au moins deux groupes ;
   • test des fonctions respectives des au moins deux groupes ;

   **caractérisé en ce que** le procédé comprend les étapes supplémentaires suivantes :

   • le fait de déterminer dans quelle mesure une fonction testée présente une liaison avec au moins une fonction testée d'au moins un autre groupe ;
   • combinaison de fonctions testées avec respectivement des fonctions liées et testées de tous les autres groupes ;
   • création de résultats intermédiaires respectifs de combinaisons respectives ;
   • regroupement des résultats intermédiaires pour former un résultat de test combiné ;

   • fourniture du résultat de test combiné.

2. Procédé selon la revendication 1, dans lequel un premier groupe comprend des fonctions qui sont classées de manière définie par l'utilisateur comme fonctions pertinentes pour la sécurité et tous les groupes supplémentaires comprennent les fonctions restantes.

3. Procédé selon l'une des revendications précédentes, dans lequel la combinaison est réalisée comme création respective d'un produit croisé.

4. Procédé selon l'une des revendications précédentes, dans lequel le résultat de test combiné est comparé à un résultat de test combiné à atteindre théoriquement pour fournir ensuite une déclaration concernant cette relation.

5. Procédé selon l'une des revendications précédentes, dans lequel les étapes précédentes sont réalisées en relation avec au moins un logiciel de l'appareil de commande à tester.

6. Procédé selon l'une des revendications précédentes 1 à 4, dans lequel les étapes précédentes sont réalisées en relation avec au moins un composant matériel de l'appareil de commande à tester.

7. Procédé selon l'une des revendications précédentes 1 à 4, dans lequel les étapes précédentes sont réalisées en relation avec au moins un logiciel et au moins un composant matériel de l'appareil de commande à tester.

8. Procédé selon l'une des revendications précédentes, dans lequel le procédé est mis en oeuvre comme complément à un procédé de test de robustesse.

9. Procédé selon l'une des revendications précédentes, dans lequel le procédé est mis en oeuvre comme complément à un procédé d'analyse parallèle en temps réel pour des essais de fonctionnement de matériel et de logiciels d'appareils de commande.

10. Utilisation d'un procédé selon l'une des revendications 1 à 9, pour une application dans un procédé de test mécanique.

11. Programme de calculateur (10), comprenant des moyens de code de programme (12) permettant de mettre en oeuvre toutes les étapes selon l'une des revendications 1 à 9 lorsque le programme est exécuté sur un calculateur.

12. Produit de programme de calculateur (16) comprenant des moyens de code de programme (12) qui sont stockés sur un support lisible par ordinateur pour mettre en oeuvre le procédé selon l'une des revendications 1 à 9 lorsque le programme est exécuté sur un calculateur.

**13.** Circuit de test (16), lequel est conçu pour exécuter un procédé selon l'une des revendications 1 à 9.

**14.** Dispositif de test (18), lequel comprend un circuit de test (16) selon la revendication 14.

**15.** Véhicule (20) comportant un dispositif de test (18) selon la revendication 14.

100

Start

110

120

130

140

150

160

170

180

190

Ende

Fig. 1

**Fig. 2**

**Fig. 3**

16

Fig. 4

18

16

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6473794 B1